# EUROPÄISCHE PATENTSCHRIFT

(11) **EP 2 461 433 B1**
(45) Veröffentlichungstag und Bekanntmachung des Hinweises auf die Patenterteilung: **06.03.2013**
(21) Anmeldenummer: 10015198.4
(22) Anmeldetag: 01.12.2010
(51) Int. Cl.: H01R 43/20, G01B 11/14, B25J 9/16

(54) **Verfahren und Vorrichtung zum Bestücken eines Steckergehäuses**
Method and device for manufacturing a connector housing
Procédé et dispositif d'assemblage d'un boîtier de connexion

(43) Veröffentlichungstag der Anmeldung: 06.06.2012
(73) Patentinhaber: Delphi Technologies, Inc., Troy MI 48007 (US)
(72) Erfinder: Larisch, Markus, 46284 Dorsten (DE)
(74) Vertreter: Robert, Vincent

(56) Entgegenhaltungen:
- DE-A1-102007 027 877
- JP-A- 5 062 752
- JP-A- 5 062 757
- JP-A- 9 014 919
- US-A- 6 043 877
- US-A1- 2004 188 642
- US-A1- 2004 266 276

## Beschreibung

Die Erfindung betrifft ein Verfahren und eine Vorrichtung zum Bestücken eines Steckergehäuses mit einem an einer elektrischen Leitung angebrachten Kontaktteil durch einen beweglichen Roboter sowie ein Verfahren zur Kalibrierung einer Steuereinheit eines beweglichen Roboters.

Ein wie vorstehend beschriebenes Bestückungsverfahren ist bekannt, bei dem das Steckergehäuse an einem Halter fixiert wird, die elektrische Leitung mit einem Kontaktteil von einem Roboter gegriffen wird und ein ortsaufgelöstes Bild des Steckergehäuses durch eine optische Erfassungsvorrichtung aufgenommen wird. Durch Auswerten des Bildes des Steckergehäuses wird bei dem bekannten Verfahren erkannt, wenn das Steckergehäuse in dem Halter gegenüber seiner gewünschten Standardposition ungewollt geneigt oder versetzt angeordnet ist, und es wird eine Korrektur einer relativen Position des Roboters in Bezug auf das Steckergehäuse durchgeführt.

Insbesondere wenn Roboter, Steckergehäuse, Halter oder Kontaktteile verwendet werden, die mit z.B. herstellungsbedingten mechanischen Toleranzen behaftet sind, kann mit dem vorstehend beschriebenen Verfahren nicht immer eine präzise und fehlerfreie Bestückung eines Steckergehäuses mit einem Kontaktteil gewährleistet werden.

JP 5 062757 A offenbart ein Verfahren zum Einsetzen eines Kontaktpins in ein Einsetzloch eines Isolators, bei dem vor dem Einsetzen des Kontaktpins Bildverarbeitungseinheiten mit integrierten Kameras in den Zwischenraum zwischen einem Halter des Kontaktpins und einem Halter des Isolators geführt werden. Es werden Bilder der Spitze des Kontaktpins und des Einsetzloches des Isolators aufgenommen und eine positionelle Verschiebung zwischen beiden wird erkannt und nach dem Entfernen der Bildverarbeitungseinheiten aus dem Zwischenraum durch Bewegen eines der Halter ausgeglichen. Daraufhin wird der Kontaktpin in das Einsetzloch eingesetzt.

Aufgabe der Erfindung ist es, ein Verfahren und eine Vorrichtung zum Bestücken eines Steckergehäuses mit einem an einer elektrischen Leitung angebrachten Kontaktteil durch einen beweglichen Roboter anzugeben, die auch bei Verwendung von toleranzbehafteten Robotern, Steckergehäusen, Haltern und/oder Kontaktteilen ein präzises, fehlerfreies und schnelles Bestücken eines Steckergehäuses mit einem an einer elektrischen Leitung angebrachten Kontaktteil ermöglichen.

Zur Lösung dieser Aufgabe ist ein Verfahren mit den Merkmalen des Anspruchs 1 vorgesehen.

Das erfindungsgemäße Verfahren zum Bestücken eines Steckergehäuses mit einem an einer elektrischen Leitung angebrachten Kontaktteil durch einen beweglichen Roboter umfasst die Schritte:
- Fixieren des Steckergehäuses an einem Halter, der mehrere Referenzmerkmale (24) aufweist,
- Greifen der elektrischen Leitung oder des Kontaktteils durch eine Greifvorrichtung des Roboters,
- Aufnehmen eines ersten ortsaufgelösten Bildes durch eine erste optische Erfassungsvorrichtung, derart, dass zumindest ein Ausschnitt des Steckergehäuses und zumindest ein Ausschnitt des Halters in dem ersten ortsaufgelösten Bild enthalten sind und
- Aufnehmen eines zweiten ortsaufgelösten Bildes durch eine zweite optische Erfassungsvorrichtung derart, adss zumindest ein Ausschnitt des Kontaktteils und zumindest ein Ausschnitt des Halters in dem zweiten ortsaufgelösten Bild enthalten sind,
- Ermitteln einer Position des Steckergehäuses relativ zu wengstens einem in dem ersten ortsaufgelösten Bild enthaltenen Referenzmerkmal des Halters in dem ersten ortsaufgelösten Bild und Ermitteln einer Position des Kontaktteils relativ zu wenigstens einem in dem zweiten ortsaufgelösten Bild enthaltenen Referenzmerkmal des Halters in dem zweiten ortsaufgelösten Bild,
- Berechnen einer zum Bestücken des Steckergehäuses mit dem Kontaktteil notwendigen Roboterbewegung unter Verwendung der ermittelten Position des Steckergehäuses und des Kontaktteils, und
- Durchführen der berechneten Bewegung durch den Roboter.

Erfindungsgemäß wird sowohl von dem an dem Halter fixierten Steckergehäuse als auch von dem von der Greifvorrichtung aufgenommenen Kontaktteil jeweils wenigstens ein ortsaufgelöstes Bild aufgenommen. Die Aufnahme der ortsaufgelösten Bilder stellt eine optische Vermessung des jeweils abgebildeten Bereichs dar, der das Steckergehäuse bzw. das Kontaktteil umfasst. Durch das Aufnehmen eines Bildes sowohl des in dem Halter fixierten Steckergehäuses als auch des von der Greifvorrichtung gegriffenen bzw. mit der von der Greifvorrichtung gegriffenen Leitung verbundenen Kontaktteils kann unabhängig von mechanischen Toleranzen der Greifvorrichtung des Roboters, des Halters, des Steckergehäuses oder des Kontaktteils eine tatsächliche Relativposition zwischen dem Steckergehäuse und dem Kontaktteil ermittelt werden, wodurch in jedem Fall ein präzises und fehlerfreies Bestücken des Steckergehäuses mit dem Kontaktteil ermöglicht wird.

Darunter, dass ein ortsaufgelöstes Bild ein bestimmtes Teil wie z.B. das Steckergehäuse oder das Kontaktteil enthält, ist im Rahmen der Erfindung prinzipiell nicht nur zu verstehen, dass das jeweilige Teil mit seinem gesamten Umfang in dem Bild enthalten ist, sondern es kann auch nur ein Ausschnitt des Teils in dem Bild abgebildet sein. Zum Beispiel kann nur ein Ausschnitt eines Steckergehäuses in dem wenigstens einen ortsaufgelösten Bild enthalten sein, welcher zum Beispiel eine zur Aufnahme des Kontaktteils ausgebildete Steckerkavität des Steckergehäuses enthält, auf die zur Ermittlung der Position des Steckergehäuses Bezug genommen wird. Es muss dann nur ein Ausschnitt des Steckergehäuses in dem Bild sichtbar sein, der ausreichend groß ist, dass die jeweilige Steckerkavität oder ein anderer vordefinierter Referenzpunkt des Steckergehäuses in dem Bild identifiziert werden kann.

Vorteilhafte Ausführungsformen der Erfindung sind in den Unteransprüchen, der Beschreibung und den Figuren beschrieben.

Erfindungsgemäß wird ein erstes ortsaufgelöstes Bild aufgenommen, welches das Steckergehäuse enthält, und ein von dem ersten ortsaufgelösten Bild verschiedenes zweites ortsaufgelöstes Bild, welches das Kontaktteil enthält. Zur Berechnung der notwendigen Roboterbewegung werden die Position des Steckergehäuses in dem ersten Bild und die Position des Kontaktteils in dem zweiten Bild verwendet. Das erste und/oder das zweite Bild können dabei prinzipiell auch sowohl das Steckergehäuse als auch das Kontaktteil enthalten.

Bevorzugt wird das erste ortsaufgelöste Bild von einer Vorderseite des Steckergehäuses her aufgenommen, von der das Kontaktteil in das Steckergehäuse eingesteckt wird, und wird das zweite ortsaufgelöste Bild, welches das Kontaktteil enthält, von einer Rückseite des Steckergehäuses her aufgenommen. Auf diese Weise werden beim Aufnehmen des ersten und des zweiten Bildes jeweils günstige Blickwinkel auf das Steckergehäuse und das Kontaktteil gewährleistet, die die nachfolgende Bildverarbeitung erleichtern. Das erste und das zweite ortsaufgelöste Bild werden durch voneinander verschiedene optische Erfassungsvorrichtungen aufgenommen, die insbesondere unabhängig voneinander montiert sein können.

Die Erfindung sieht vor, dass das erste ortsaufgelöste Bild den Halter enthält, wobei eine Position des Steckergehäuses relativ zu dem Halter in dem ersten ortsaufgelösten Bild ermittelt wird und dass das zweite ortsaufgelöste Bild den Halter enthält, wobei eine Position des Kontaktteils relativ zu dem Halter in dem zweiten ortsaufgelösten Bild ermittelt wird. Durch Verwenden des Halters als gemeinsames Bezugsobjekt kann die Relativposition des Steckergehäuses zu dem Kontaktteil präzise ermittelt werden, auch wenn das das Steckergehäuse enthaltende Bild und das das Kontaktteil enthaltende Bild von verschiedenen Standpunkten einer optischen Erfassungsvorrichtung aus aufgenommen werden.

Zum Aufnehmen eines gut auswertbaren das Kontaktteil und den Halter enthaltenden zweiten ortsaufgelösten Bildes kann das Kontaktteil von dem Roboter auf den Halter zu bewegt werden, bevor das zweite ortsaufgelöste Bild aufgenommen wird. Dies kann derart geschehen, dass sich das Kontaktteil in etwa in demselben Abstand von der optischen Erfassungsvorrichtung befindet wie der Halter.

Ein von der optischen Erfassungsvorrichtung aufgenommenes ortsaufgelöstes Bild enthält eine Information über die Position der in dem Bild jeweils enthaltenen Objekte, z.B. des Steckergehäuses und des Kontaktteils, in Bezug auf eine Position und Ausrichtung der das jeweilige ortsaufgelöste Bild aufnehmenden optischen Erfassungsvorrichtung im Raum, d.h. aus dem Bild ist ersichtlich, wo sich das abgebildete Objekt in Bezug auf eine Bildebene der optischen Erfassungsvorrichtung, die senkrecht zu einer optischen Achse der optischen Erfassungsvorrichtung verläuft, befindet.

Bevorzugt werden die aus dem wenigstens einen ortsaufgelösten Bild ermittelten Positionen des Steckergehäuses und des Kontaktteils in dem jeweiligen Bild, die wie vorstehend beschrieben in Bezug auf ein Bezugssystem der das jeweilige Bild erfassenden optischen Erfassungsvorrichtung definiert sind, in entsprechende Positionen in einem Bezugssystem des Roboters umgerechnet, damit der Roboter die tatsächliche Position des Steckergehäuses korrekt anfahren kann. Hierzu ist bevorzugt vorgesehen, dass das zweite ortsaufgelöste Bild die Greifvorrichtung des Roboters enthält und eine Position der Greifvorrichtung in dem zweiten ortsaufgelösten Bild ermittelt wird. Die auf diese Weise ermittelte Position der Greifvorrichtung in Bezug auf die das Bild aufnehmende optische Erfassungsvorrichtung wird mit den in einer Steuereinheit des Roboters ermittelten internen Koordinaten der Greifvorrichtung verglichen und es wird daraus eine Koordinatentransformation ermittelt, mit der in Bezug auf die optische Erfassungsvorrichtung ermittelte Positionen z.B. des Steckergehäuses und des Kontaktteils in das Bezugssystem der Steuereinheit des Roboters umgerechnet werden können. Prinzipiell kann auch ein anderer Teil des Roboters als die Greifvorrichtung wie vorstehend beschrieben von der optischen Erfassungsvorrichtung abgebildet und bildverarbeitet werden, um die Position des Roboters zu ermitteln. Gemäß einer vorteilhaften Ausführungsform wird die Position der Greifvorrichtung in wenigstens einem ortsaufgelösten Bild relativ zu dem in demselben Bild enthaltenen Halter ermittelt.

Der Halter kann auf einer Vorder- und/oder Rückseite jeweils ein oder mehrere Referenzmerkmale umfassen. Erfindungsgemäß ist vorgesehen, dass eine Position des Steckergehäuses relativ zu wenigstens einem in dem ersten ortsaufgelösten Bild enthaltenen Referenzmerkmal des Halters ermittelt wird, und dass eine Position des Kontaktteils relativ zu wenigstens einem in dem zweiten ortsaufgelösten Bild enthaltenen Referenzmerkmal des Halters ermittelt wird. Die Verwendung solcher Referenzmerkmale erleichtert das Ermitteln der Position des Kontaktteils bzw. des Steckergehäuses relativ zu dem Halter, insbesondere wenn das jeweilige ortsaufgelöste Bild nur einen Ausschnitt des Halters enthält. Prinzipiell können mehrere Referenzmerkmale des Halters im Wesentlichen gleich ausgestaltet sein. Bevorzugt sind mehrere Referenzmerkmale des Halters aber voneinander unterscheidbar und stellen zum Beispiel Codierungen dar, wobei in einer beispielhaften Ausführungsform ein Referenzmerkmal in einem das Referenzmerkmal enthaltenden ortsaufgelösten Bild anhand seiner Codierung eindeutig identifiziert wird.

Mit einer optischen Erfassungsvorrichtung können zweidimensionale Bilder des jeweils abgebildeten Raumbereichs aufgenommen werden. Gemäß einer vorteilhaften Ausführungsform des Verfahrens werden aus den zweidimensionalen Positionen des Kontaktteils, des Halters und/oder des Roboters in dem wenigstens einen ortsaufgelösten Bild jeweils eine Position und Orientierung des jeweiligen Teils im Raum, d.h. in drei Dimensionen, berechnet. Hierzu können zunächst die zweidimensionalen Positionen von zwei, drei oder mehr Referenzpunkten des jeweiligen Teils in dem jeweiligen ortsaufgelösten Bild ermittelt werden. In Kenntnis der räumlichen Dimensionen des jeweiligen Teils und damit der tatsächlichen relativen Lagen der Referenzpunkte zueinander im Raum, die zum Beispiel in einer Steuereinheit vorab hinterlegt worden sein können, kann daraus für jedes Teil seine Position und/oder seine Orientierung im Raum berechnet werden. Diese dreidimensionalen Positionen und/oder Orientierungen können dann zur Berechnung der zum Bestücken notwendigen Roboterbewegung verwendet werden.

Gemäß einer vorteilhaften Ausführungsform ist vorgesehen, dass die Position des Steckergehäuses relativ zu mehreren in einem ersten ortsaufgelösten Bild, welches wie vorstehend beschrieben das Steckergehäuse und den Halter enthält, enthaltenen Referenzmerkmalen des Halters ermittelt wird, und/oder dass die Position des Kontaktteils relativ zu mehreren in einem zweiten ortsaufgelösten Bild, welches wie vorstehend beschrieben das Kontaktteil und den Halter enthält, enthaltenen Referenzmerkmalen des Halters ermittelt wird. Diese mehreren in dem ersten bzw. zweiten Bild ermittelten Relativpositionen können zur Berechnung der Position und/oder der Orientierung des Steckergehäuses bzw. des Kontaktteils relativ zu dem Halter in drei Dimensionen verwendet werden.

Gemäß einer weiteren Ausführungsform wird eine Krümmung der elektrischen Leitung in dem das Kontaktteil enthaltenden ortsaufgelösten Bild ermittelt werden und daraus eine Auslenkung des Kontaktteils relativ zu der Greifvorrichtung berechnet.

Gemäß einer vorteilhaften Ausführungsform wird ein Halter verwendet, der mehrere Haltevorrichtungen zum Fixieren von mehreren Steckergehäusen umfasst. Es können dann zuerst die Positionen der Steckergehäuse ermittelt werden und anschließend alle Steckergehäuse mit Kontaktteilen bestückt werden. Zur Ermittlung der Positionen der Steckergehäuse können bevorzugt mehrere ortsaufgelöste Bilder aufgenommen werden, die verschiedene Steckergehäuse enthalten, wobei der Halter zur Aufnahme der mehreren Bilder mittels eines Antriebs schrittweise an einer optischen Erfassungsvorrichtung vorbeigeführt werden, die jeweils ein ortsaufgelöstes Bild des vor der Erfassungsvorrichtung befindlichen Abschnitts des Halters aufnimmt. Die verschiedenen aufgenommenen Abschnitte können dabei anhand von unterscheidbaren in den jeweiligen Abschnitten des Halters angeordneten Referenzmerkmalen unterschieden werden und die aufgenommenen Bilder so den jeweiligen Halterabschnitten zugeordnet werden.

Prinzipiell können verschiedene Typen von Steckergehäusen mit dem erfindungsgemäßen Verfahren bestückt werden, welche beispielsweise verschiedene Anzahlen und/oder verschieden Anordnungen von Steckerkavitäten enthalten können. Bevorzugt wird der Typ eines an einem bestimmten Halter fixierten Steckergehäusetyps unabhängig von der zur Positionsbestimmung des Steckergehäuses durchgeführten optischen Bildaufnahme und Bildverarbeitung ermittelt und einer Steuerung des Roboters mitgeteilt, woraufhin abhängig von dem ermittelten Typ eine automatische Bestückung der Steckerkavitäten des jeweiligen Steckergehäuses mit Kontaktteilen durchgeführt wird.

Gemäß einer vorteilhaften Ausführungsform wird eine optische Erfassungsvorrichtung mit einem entrozentrischen Objektiv verwendet, um das wenigstens eine ortsaufgelöste Bild aufzunehmen. Optische Verzerrungen eines verwendeten Objektivs können ermittelt und bei der anschließenden Bildverarbeitung korrigiert werden, indem ein Bild eines vorab spezifizierten Referenzmusters, insbesondere eines regelmäßigen Referenzmusters wie z.B. eines Schachbrettmusters, mit der Erfassungsvorrichtung aufgenommen wird und die in dem Bild enthaltenen Verzerrungen berechnet werden.

Wenn ein Halter mit auf zwei Seiten des Halters vorgesehenen Referenzmerkmalen verwendet wird, so wird vorzugsweise vor der Durchführung des Bestückungsvorgangs eine Kalibrierung des Halters durchgeführt. Hierzu wird zunächst von beiden Seiten des Halters ein ortsaufgelöstes Bild aufgenommen, wobei jedes Bild ein oder mehrere auf der jeweiligen Seite des Halters angeordnete Referenzmerkmale enthält sowie eine Markierung des Halters, die von beiden Seiten des Halters sichtbar ist. Es werden dann die Positionen der Referenzmerkmale relativ zu den Markierungen ermittelt. Hierzu können weitere die Referenzmerkmale enthaltende ortsaufgelöste Bilder von beiden Seiten des Halters aufgenommen werden, wozu insbesondere der Halter schrittweise an einer optischen Erfassungsvorrichtung vorbei geführt werden kann. In der vorstehend beschriebenen Weise können die relativen Positionen der auf beiden Seiten des Halters vorhandenen Referenzmerkmalen berechnet und anschließend bei der Positionsberechnung berücksichtigt werden. Beispielsweise kann dabei eine Korrekturtabelle mit Korrekturwerten erstellt werden, die einen Versatz zwischen auf der einen und auf der anderen Seite des Halters vorgesehenen Referenzmerkmalen angibt.

Weiterer Gegenstand der Erfindung ist eine Vorrichtung zum Bestücken eines Steckergehäuses mit einem an einer elektrischen Leitung angebrachten Kontaktteil, umfassend
- einen beweglichen Roboter mit einer Greifvorrichtung, die zum Greifen der elektrischen Leitung oder des Kontaktteils ausgebildet ist,
- einen Halter, der zum Fixieren des Steckergehäuses ausgebildet ist und mehrere Referenzmerkale (24) aufweist,
- eine erste optische Erfassungsvorrichtung, die ausgebildet ist, um ein erste ortsaufgelöstes Bild derart aufzunehmen, dass zumindest ein Ausschnitt des Steckergehäuses und zumindest ein Ausschnitt des Halters in dem ersten ortsaufgelösten Bild enthalten sind
- eine zweite optische Erfassungsvorrichtung, die ausgebildet ist, um ein zweites ortsaufgelöstes Bild derart aufzunehmen, dass zumindest ein Ausschnitt des Kontaktteils und zumindest ein Ausschnitt des Halters in dem zweiten ortsaufgelösten Bild enthalten sind,
- eine Steuereinheit, die ausgebildet ist, um eine Position des Steckergehäuses relativ zu wenigstens einem in dem ersten ortsaufgelösten Bild enthaltenen Referenzmerkmal des Halters in dem ersten ortsaufgelösten Bild und eine Position des Kontaktteils relativ zu wenigstens einem in dem zweiten ortsaufgelösten Bild enthaltenen Referenzmerkmal des Halters in dem zweiten ortsaufgelösten Bild zu ermitteln und eine zum Bestücken des Steckergehäuses mit dem Kontaktteil notwendige Roboterbewegung unter Verwendung der ermittelten Positionen des Steckergehäuses und des Kontaktteils zu berechnen, und um den Roboter so anzusteuern, dass der Roboter die berechnete Bewegung durchführt.

Die erfindungsgemäße Vorrichtung kann insbesondere zum Durchführen des erfindungsgemäßen Verfahrens ausgebildet sein. Die vorstehend in Bezug auf das Verfahren beschriebenen vorteilhaften Ausführungsformen und Vorteile gelten entsprechend für die Vorrichtung.

Der Halter kann sowohl auf einer Vorderseite als auch auf einer Rückseite ein oder mehrere Referenzmerkmale aufweisen, die nur von der jeweiligen Vorder- oder Rückseite des Halters her sichtbar sind und/oder eine oder mehrere Markierungen, die von beiden Seiten des Halters her sichtbar sind.

Gemäß einer vorteilhaften Ausführungsform ist wenigstens eines der Referenzmerkmale als Data Matrix Code ausgebildet. Ein solcher Data Matrix Code kann insbesondere auf einer Kunststofffolie des Halters aufgebracht sein. Bevorzugt sind mehrere Data Matrix Codes voneinander verschieden, sodass anhand der Data Matrix Codes jedes Referenzmerkmal eindeutig identifizierbar ist.

Ein hierein beschriebenes beispielhaftes Verfahren zur Kalibrierung einer Steuereinheit eines beweglichen Roboters umfasst die Schritte:
a) Anbringen eines Referenzobjekts an einem Teil des Roboters,
b) kontinuierliches Erfassen der Position des Referenzobjekts durch zeitlich aufeinanderfolgendes Aufnehmen von mehreren ortsaufgelösten Bildern des Referenzobjekts mit einer optischen Erfassungsvorrichtung,
c) Bewegen des Roboters in eine Referenzposition, in der sich in der optischen Erfassungsvorrichtung ein vorgegebenes ortsaufgelöstes Bild des Referenzobjekts ergibt, durch die Steuereinheit unter Verwendung der aufgenommenen ortsaufgelösten Bilder, und
d) Abspeichern von von der Steuereinheit ermittelten Koordinaten des Roboters in der Referenzposition.

Die in der Steuereinheit abgespeicherten internen Koordinaten des Roboters in der Referenzposition geben an, wie der Roboter in Bezug auf die optische Erfassungsvorrichtung im Raum positioniert und orientiert ist. Diese Information kann von der Steuereinheit verwendet werden, um mittels der optischen Erfassungsvorrichtung ermittelte Positionen in das Bezugssystem des Roboters umzurechnen, und erlauben es somit, den Roboter zuverlässig so anzusteuern, dass er eine vorgegebene Position eines Objekts zuverlässig anfährt. Die Koordinaten können sowohl Koordinaten einer Position als auch einer Ausrichtung des Teils des Roboters im Raum umfassen.

Beispielsweise werden die vorstehend genannten Schritte a) bis d) zumindest einmal mit einem an einem Flansch des Roboters angebrachte Referenzobjekt und zumindest einmal mit einem an einer an dem Flansch des Roboters angebrachten Greifvorrichtung des Roboters durchgeführt. Mit dem vorstehend genannten Verfahren kann die Position und die Ausrichtung eines Greifers relativ zu einer Position und Ausrichtung des Roboterflansches in dreidimensionalen Koordinaten ermittelt werden, obwohl ein ortsaufgelöstes Bild nur eine Abbildung in zwei Koordinaten enthält. Diese Information kann von der Steuereinheit nachfolgend verwendet werden, um mit der Greifvorrichtung eine vorgegebene Position exakt anzufahren. Hierbei kann insbesondere für den Flansch des Roboters und für die Greifvorrichtung dasselbe Referenzobjekt verwendet werden. In diesem Fall hat eine ungenaue Ausgestaltung des Referenzobjekts keinen Einfluss auf die Genauigkeit der Vermessung, da in beiden Schritten im Wesentlichen die gleichen Messfehler gemacht werden und diese sich somit bei der Ermittlung der Relativposition von Roboterflansch und Greifvorrichtung ausgleichen.

Das Referenzobjekt kann an einer Haltevorrichtung eines Roboterflansches befestigt werden, die zur Befestigung einer Greifvorrichtung des Roboters dient. Als Referenzobjekt kann insbesondere eine Kalibriertafel mit einem Schachbrettmuster verwendet werden. Die Kalibriertafel kann vier in einem Rechteck angeordnete Referenzmarken umfassen und/oder einen senkrecht hervorstehenden Stift, der insbesondere im Mittelpunkt der Tafel angeordnet sein kann und der in seiner Mitte einen Markierungspunkt enthalten kann. Die Referenzposition des Referenzobjekts kann dabei so definiert sein, dass sie dann erreicht ist, wenn sich in dem aufgenommenen Bild der Markierungspunkt im Mittelpunkt eines aus den vier Referenzmarken bestehenden Rechtecks befindet und die Tafel somit senkrecht zur optischen Erfassungsvorrichtung steht. Aus der Größe des Referenzobjekts in dem aufgenommenen Bild kann dann der Abstand des Roboters von der optischen Erfassungsvorrichtung bestimmt werden.

Das beispielhafte Kalibrierungsverfahren für die Steuereinheit eines Roboters kann insbesondere in Kombination mit einem wie vorstehend beschriebenen Bestückungsverfahren verwendet werden.

Nachfolgend wird die Erfindung beispielhaft anhand einer vorteilhaften Ausführungsform unter Bezugnahme auf die beigefügten Figuren beschrieben. Es zeigen:
- Fig. 1: eine perspektivische Ansicht einer Bestückungsvorrichtung gemäß einer Ausführungsform der Erfindung;
- Fig. 2: eine Seitenansicht der Vorrichtung von Fig. 1;
- Fig. 3a, b: zwei beispielhafte mit der Vorrichtung von Fig. 1 und 2 aufgenommene, ein Steckergehäuse enthaltende ortsaufgelöste Bilder;
- Fig. 4: eine weitere perspektivische Ansicht der Vorrichtung von Fig. 1 und 2;
- Fig. 5: eine Seitenansicht der erfindungsgemäßen Vorrichtung von Fig. 4;
- Fig. 6: ein beispielhaftes mit der optischen Erfassungsvorrichtung von Fig. 1, 2, 4 und 5 aufgenommenes, und ein Kontaktteil enthaltendes ortsaufgelöstes Bild;
- Fig. 7a, b: beispielhafte zur Durchführung eines Kalibrierungsverfahrens aufgenommene ortsaufgelöste Bilder eines Halters der in Fig. 1, 2, 4 und 5 gezeigten Vorrichtung; und
- Fig. 8: ein beispielhaftes Referenzobjekt zur Durchführung des beispielhaften Kalibrierungsverfahrens.

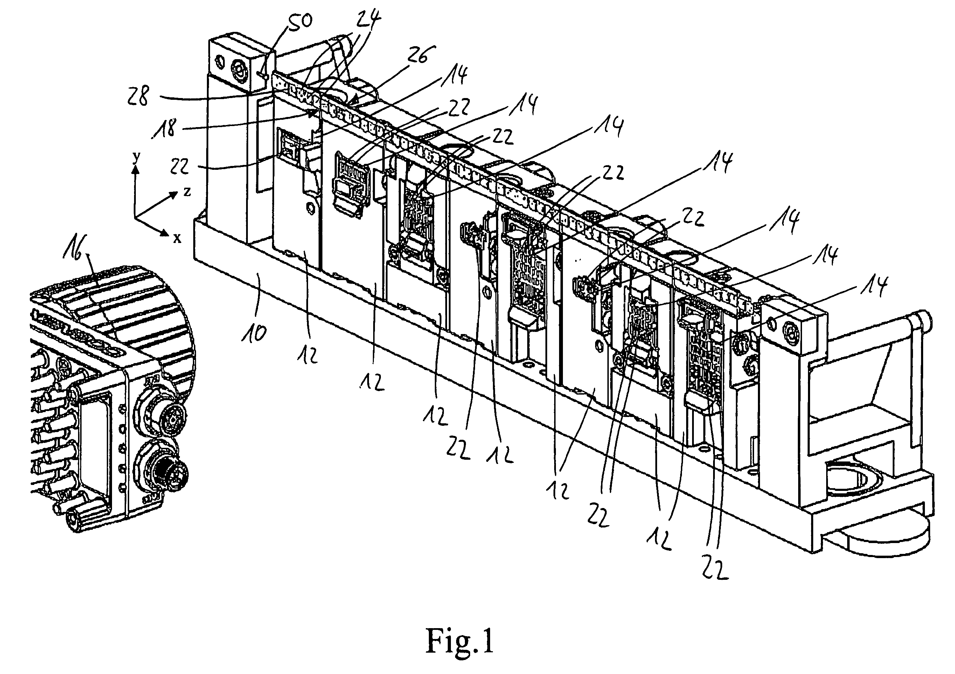

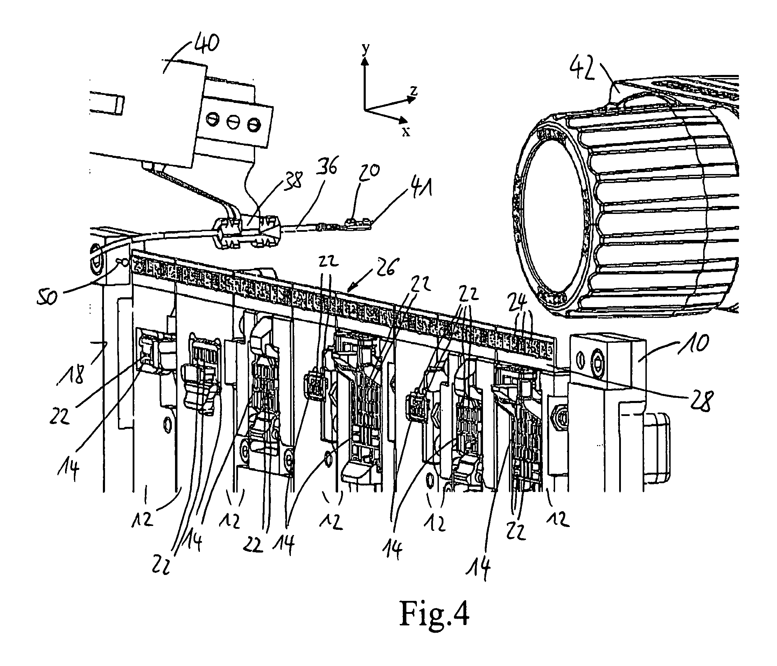

Fig. 1 zeigt eine perspektivische Ansicht einer Bestückungsvorrichtung gemäß einer Ausführungsform der Erfindung. Die Vorrichtung enthält einen Halter 10 mit mehreren Haltevorrichtungen 12, in denen jeweils ein Steckergehäuse 14 durch Verrasten fixiert ist. Die Haltevorrichtungen 12 des Halters 10 sind in einer Längsrichtung x des Halters 10 aufeinander folgend angeordnet und mit einem Basisabschnitt des Halters 10 lösbar verbunden. Eine erste optische Erfassungsvorrichtung 16 ist auf eine Rückseite 26 des Halters 10 gerichtet, von welcher ein Kontaktteil 20 (siehe Fig. 4) in eine Steckerkavität 22 eines Steckergehäuses 14 einsetzbar ist, und ist ausgebildet, um ein ortsaufgelöstes Bild aufzunehmen, welches den Halter 10 und ein Steckergehäuse 14 enthält.

Der Halter 10 umfasst mehrere als Data Matrix Codes ausgebildete Referenzmerkmale 24, die auf einem Träger 28 in Längsrichtung x des Halters 10 aufeinanderfolgend in regelmäßigen Abständen angeordnet sind und mit dem Träger 28 ein Lineal bilden. Im vorliegenden Ausführungsbeispiel sind sowohl auf der Rückseite 26 als auch auf einer Vorderseite 18 des Halters 10 Referenzmerkmale 24 angeordnet, die jeweils nur von der Vorder- bzw. Rückseite 18, 26 her sichtbar sind. Prinzipiell könnten Referenzmerkmale aber auch von beiden Seiten 18, 26 her sichtbar sein und dazu beispielsweise auf einem transparenten Trägermaterial aufgebracht sein.

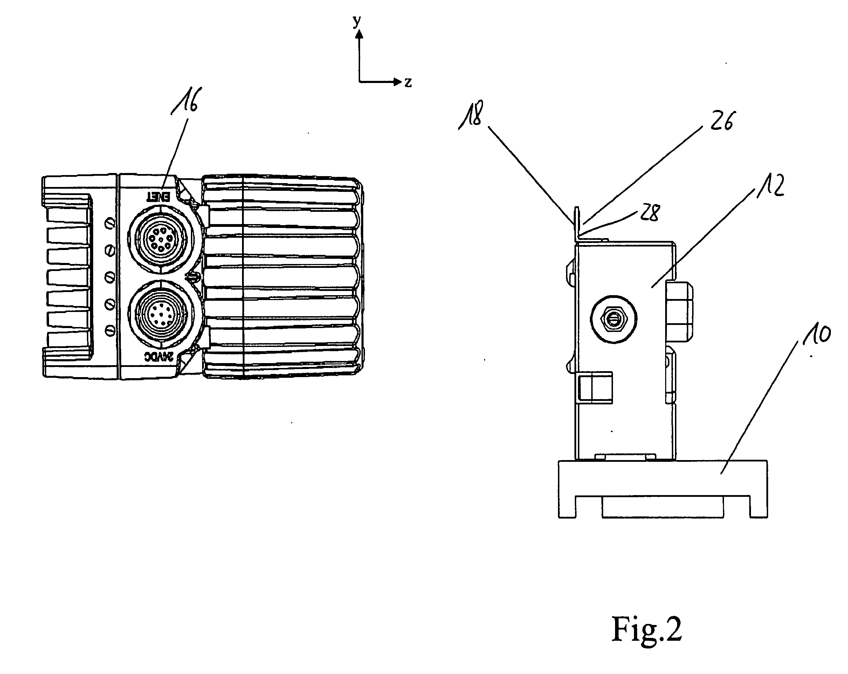

Wie aus der Seitenansicht in Fig. 2 ersichtlich, sind die optische Erfassungsvorrichtung 16 und der Halter 10 so angeordnet, dass die optische Achse der optischen Erfassungsvorrichtung 16 und die Einsteckrichtung z, in der ein Kontaktteile 20 in ein Steckergehäuse 14 einsetzbar ist, im Wesentlichen parallel sind. Im vorliegenden Ausführungsbeispiel wird der Halter 10 zum Aufnehmen der die verschiedenen Steckergehäuse 14 enthaltenden Bilder in seiner Längsrichtung x durch einen geeigneten Antrieb verschoben und an der optischen Erfassungsvorrichtung 16 vorbeigeführt.

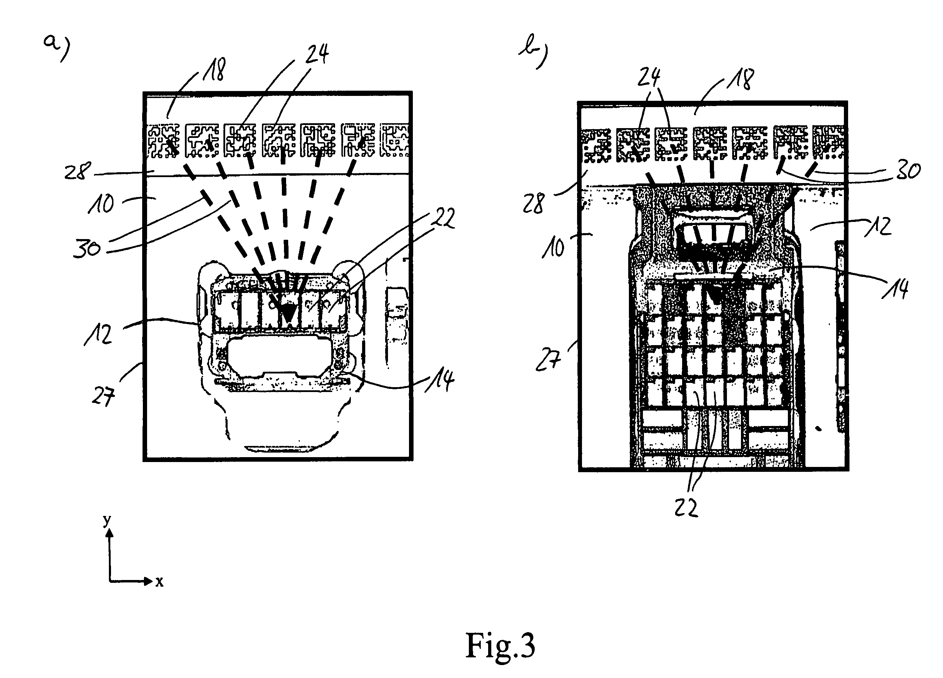

Fig. 3a und 3b zeigen beispielhafte mit der optischen Erfassungsvorrichtung 16 aufgenommene ortsaufgelöste Bilder 27. Wie in Fig. 3a und b durch Pfeile 30 angedeutet, wird aus den ortsaufgelösten Bildern der optischen Erfassungsvorrichtung 16 jeweils die Position einer bestimmten Steckerkavität 22 des abgebildeten Steckergehäuses 14 relativ zu mehreren Referenzmerkmalen 24 des Halters 10 ermittelt. Die Referenzmerkmale 24 können dabei durch Auswerten der entsprechenden Data Matrix Codes durch Bildverarbeitung des ortsaufgelösten Bildes identifiziert und dem jeweils abgebildeten Steckergehäuse 14 zugeordnet werden.

Durch Bildverarbeitung wird außerdem ein Typ eines in einem ortsaufgelösten Bild 27 abgebildeten Steckergehäuses 14 erkannt, wobei bei der späteren Bestückung abhängig von dem erkannten Typ und anhand von abgespeicherten Anordnungen der Steckerkavitäten 22 für den jeweiligen Typ eine automatische Bestückung aller Steckerkavitäten 22 des Steckergehäuses 14 durchgeführt wird.

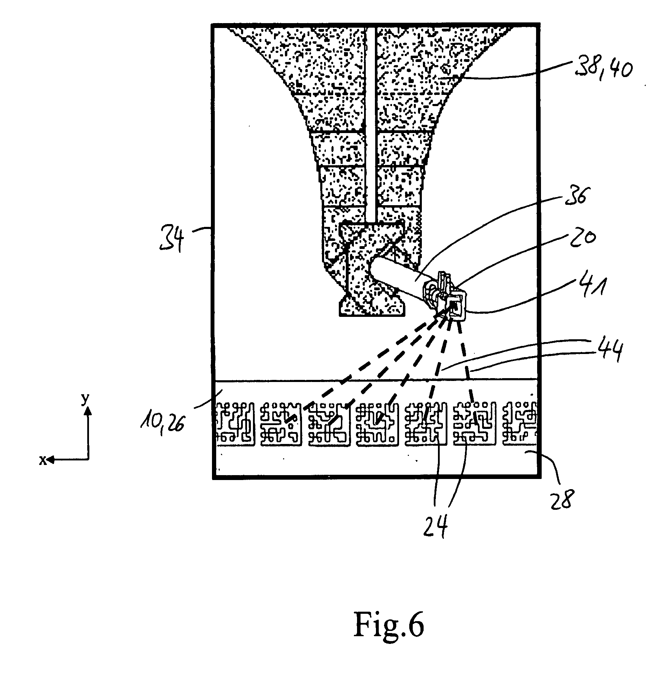

Fig. 4 zeigt die Vorrichtung von Fig. 1 und 2 während der Aufnahme eines weiteren in Fig. 6 beispielhaft gezeigten ortsaufgelösten Bildes 34 durch eine zweite optische Erfassungsvorrichtung 42, die auf die Vorderseite 18 des Halters 10 gerichtet ist. In Fig. 4 ist dabei nur eine Haltevorrichtung 12 des Halters 10 dargestellt.

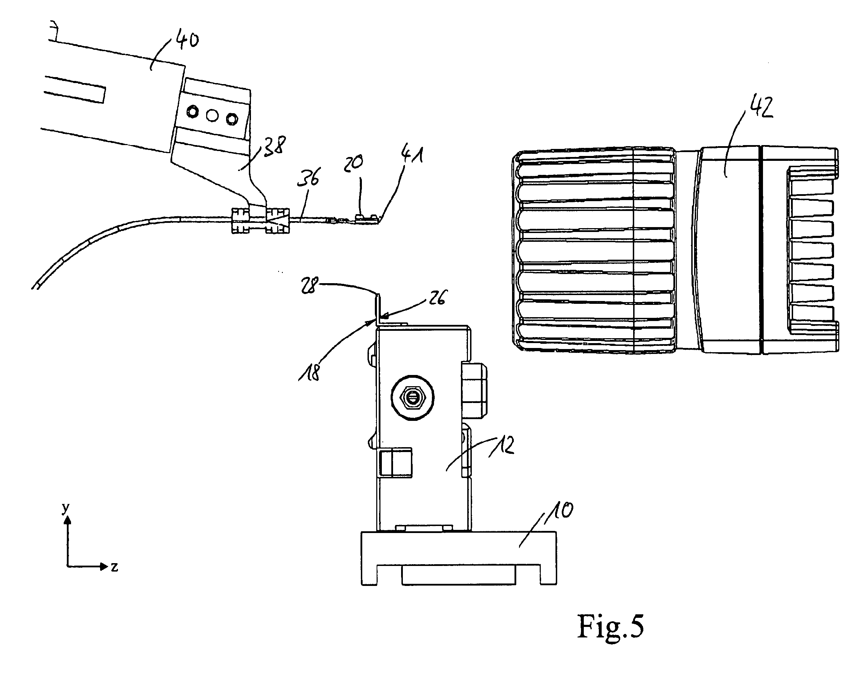

In Fig. 4 ist eine elektrische Leitung 36 mit einem an der elektrischen Leitung 36 angebrachten Kontaktteil 20 ist von einer Greifvorrichtung 38 eines Roboters 40 gegriffen und derart in die Nähe des Halters 10 bewegt, dass eine Stirnseite 41 des Kontaktteils 20 und der Halter 10 wie in Fig. 5 gezeigt in etwa gleich weit von der optischen Erfassungsvorrichtung entfernt sind.

Das in Fig. 6 gezeigte mit der optischen Erfassungsvorrichtung 42 aufgenommene ortsaufgelöste Bild 34 enthält das Kontaktteil 20 und mehrere Referenzmerkmale 24 des Halters 10. Wie in Fig. 6 durch die Pfeile 44 angedeutet, wird die Relativposition des Kontaktteils 20 relativ zu den mehreren Referenzmerkmalen 24 in dem ortsaufgelösten Bild 34 ermittelt. Zudem wird eine Krümmung der elektrischen Leitung 36 in dem ortsaufgelösten Bild 34 ermittelt und daraus eine Auslenkung des Kontaktteils 20 relativ zu der Greifvorrichtung 38 bestimmt.

Die Vorrichtung ist ausgebildet, um für jedes Steckergehäuse 14 ein wie in Fig. 3a und b gezeigtes Bild aufzunehmen und daraufhin für jede elektrische Leitung 36 ein wie in Fig. 6 gezeigtes Bild aufzunehmen und anhand der ermittelten Positionen der Steckergehäuse 14 und des jeweiligen Kontaktteils 20 die Steckerkavitäten 22 der Steckergehäuse 14 der Reihe nach mit Kontaktteilen 20 zu bestücken.

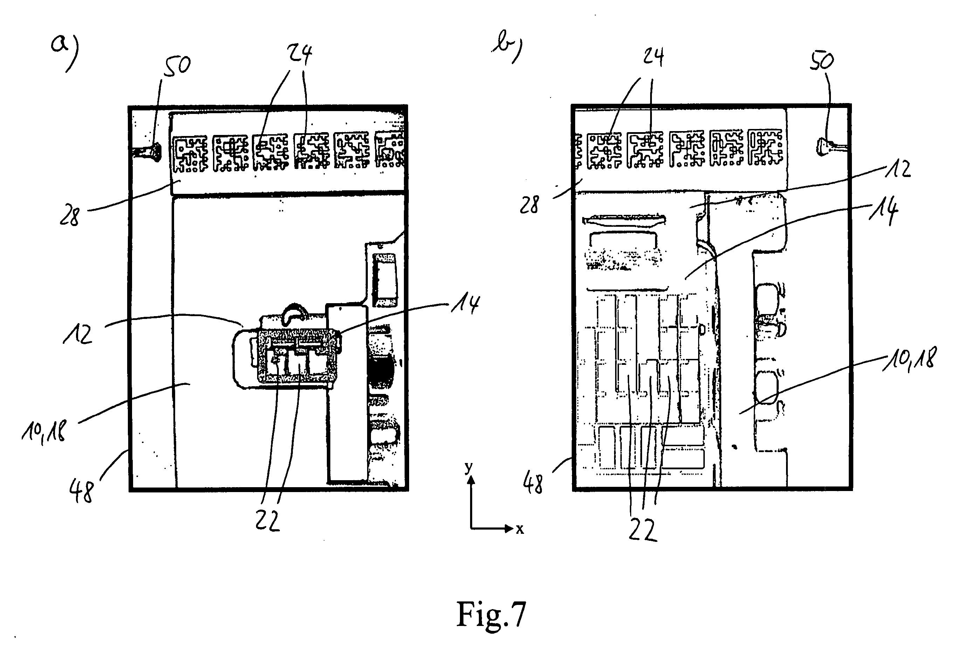

Fig. 7a und b zeigen jeweils ein beispielhaftes mit einer wie in Fig. 1, 2 oder 4, 5 gezeigten optischen Erfassungsvorrichtung 16, 42 aufgenommenes ortsaufgelöstes Bild 48, welches für eine Kalibrierung des Halters 10 und der Referenzmerkmale 24 verwendet wird. Die in Fig. 7a und 7b gezeigten Bilder sind dabei jeweils von einer Vorderseite 18 des Halters 10 her aufgenommen, wobei Fig. 7a den linken seitlichen Endbereich und Fig. 7b den rechten seitlichen Endbereich des Halters 10 mit einem aufgenommenen Steckergehäuse 14 zeigen. Jedes ortsaufgelöste Bild 48 enthält eine Markierung 50 des Halters 10, die von beiden Seiten 18, 26 des Halters 10 her sichtbar ist und als eine Referenz für die Kalibrierung der Referenzmerkmale 24 dient. In jedem ortsaufgelösten Bild 48 werden die Positionen der in dem jeweiligen Bild enthaltenen Referenzmerkmale 24 zu der Markierung 50 bestimmt. Ebenso werden von der Rückseite 26 des Halters 10 her in Fig. 7 nicht eigens dargestellte ortsaufgelöste Bilder 48 aufgenommen, die die Markierungen 50 sowie auf der Rückseite 26 des Halters 10 angeordnete Referenzmerkmale 24 enthalten. Aus den Positionen der Referenzmerkmale 24 auf der Vorder- und auf der Rückseite 18, 26 in den von der Vorder- und Rückseite 18, 26 her aufgenommenen Bildern 48 relativ zu der in den Bildern 48 jeweils enthaltenen Markierung 50 werden die Positionen der auf der Vorderseite 18 des Halters 10 angeordneten Referenzmerkmale 24 relativ zu den auf der Rückseite 26 angeordneten Referenzmerkmalen 24 bestimmt. Diese Werte werden als Kalibrierung abgespeichert und zu einer Korrektur der anhand der auf der Vorder- und Rückseite 18, 26 jeweils vorhandenen Referenzmerkmale 24 bestimmten Positionen des Steckergehäuses 14 bzw. des Kontaktteils 20 verwendet. Auf diese Weise wird eine zuverlässige Positionsbestimmung auch dann ermöglicht, wenn die Referenzmerkmale 24 auf der Vorder- und auf der Rückseite 18, 26 nicht direkt gegenüberliegend sondern zum Beispiel versetzt zueinander angeordnet sind.

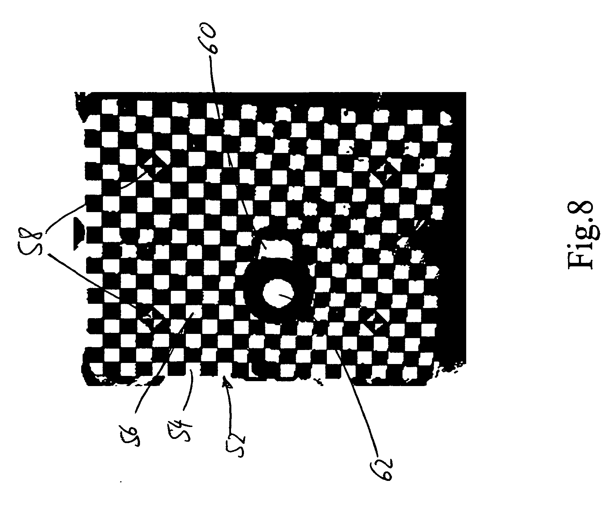

Fig. 8 zeigt ein Referenzobjekt 52, welches zur Durchführung des beispielhaften Verfahrens zur Kalibrierung einer Steuereinheit eines beweglichen Roboters geeignet ist. Das Referenzobjekt 52 umfasst eine Tafel 54 mit einem aufgebrachten Schachbrettmuster 56 sowie vier in einem Rechteck angeordneten Referenzmarken 58 und einen senkrecht hervorstehenden Stift 60 im Mittelpunkt der Tafel mit einem Markierungspunkt 62. Das Referenzobjekt 52 ist an einen Roboterflansch oder an einen Greifvorrichtung des Roboters anbringbar. Bei angebrachtem Referenzobjekt 52 wird mittels einer optischen Erfassungsvorrichtung fortlaufend ein ortsaufgelöstes Bild des Referenzobjekts 52 erzeugt. Anhand der Bilder wird der Roboter angesteuert, um das Referenzobjekt 52 in einer Referenzposition vor der optischen Erfassungsvorrichtung zu platzieren, in der sich in der optischen Erfassungsvorrichtung ein vorab spezifiziertes Bild des Referenzobjekts 52 ergibt.

Die Referenzposition ist im vorliegenden Beispiel erreicht, wenn sich in dem aufgenommenen Bild der Mittelpunkt 62 des Referenzobjekts 52 in der Mitte eines aus den vier Referenzmarken 58 gebildeten Rechtecks befindet. Die Tafel 54 steht dann senkrecht zur optischen Achse der optischen Erfassungsvorrichtung. In dieser Referenzposition werden dann die internen von der Steuereinheit erfassten Koordinaten des Roboters erfasst und nachfolgend zur Kalibrierung verwendet. Durch Durchführen einer wie vorstehend beschriebenen Referenzpositionsmessung bei an einem Roboterflansch angebrachtem Referenzobjekt 52 und bei an einer Greifvorrichtung des Roboters angebrachtem Referenzobjekt 52 kann die genaue Position einer Greifvorrichtung relativ zu dem Roboterflansch bestimmt werden, wodurch eine äußerst präzise Kalibrierung einer Steuereinheit des Roboters mit einer Greifvorrichtung ermöglicht wird.

### Bezugszeichenliste

- 10: Halter
- 12: Haltevorrichtung
- 14: Steckergehäuse
- 16: optische Erfassungsvorrichtung
- 18: Vorderseite
- 20: Kontaktteil
- 22: Steckerkavität
- 24: Referenzmerkmal
- 26: Rückseite
- 27: ortsaufgelöstes Bild
- 28: Träger
- 30: Pfeil
- 34: ortsaufgelöstes Bild
- 36: elektrische Leitung
- 38: Greifvorrichtung
- 40: Roboter
- 41: Stirnseite
- 42: optische Erfassungsvorrichtung
- 44: Pfeil
- 48: ortsaufgelöstes Bild
- 50: Markierung
- 52: Referenzobjekt
- 54: Tafel
- 56: Schachbrettmuster
- 58: Referenzmarke
- 60: Stift
- 62: Mittelpunkt

## Patentansprüche

1. Verfahren zum Bestücken eines Steckergehäuses (14) mit einem an einer elektrischen Leitung (36) angebrachten Kontaktteil (20) durch einen beweglichen Roboter (40), wobei das Verfahren die Schritte umfasst:
- Fixieren des Steckergehäuses (14) an einem Halter (10), der mehrere Referenzmerkmale (24) aufweist,
- Greifen der elektrischen Leitung (36) oder des Kontaktteils (20) durch eine Greifvorrichtung (38) des Roboters (40),
- Aufnehmen eines ersten ortsaufgelösten Bildes (27) durch eine erste optische Erfassungsvorrichtung (16) derart, dass zumindest ein Ausschnitt des Steckergehäuses (14) und zumindest ein Ausschnitt des Halters (10) in dem ersten ortsaufgelösten Bild (27) enthalten sind und
- Aufnehmen eines zweiten ortsaufgelösten Bildes (34) durch eine zweite optische Erfassungsvorrichtung (42) derart, dass zumindest ein Ausschnitt des Kontaktteils (20) und zumindest ein Ausschnitt des Halters (10) in dem zweiten ortsaufgelösten Bild (34) enthalten sind,
- Ermitteln einer Position des Steckergehäuses (14) relativ zu wenigstens einem in dem ersten ortsaufgelösten Bild (27) enthaltenen Referenzmerkmal (24) des Halters (10) in dem ersten ortaufgelösten Bild (27) und Ermitteln einer Position des Kontaktteils (20) relativ zu wenigstens einem in dem zweiten ortsaufgelösten Bild (34) enthaltenen Referenzmerkmal (24) des Halters (10) in dem zweiten ortsaufgelösten Bild (34),
- Berechnen einer zum Bestücken des Steckergehäuses (14) mit dem Kontaktteil (20) notwendigen Roboterbewegung unter Verwendung der ermittelten Positionen des Steckergehäuses (14) und des Kontaktteils (20), und
- Durchführen der berechneten Bewegung durch den Roboter (40).

2. Verfahren nach Anspruch 1,
**dadurch gekennzeichnet, dass**
das erste ortsaufgelöste Bild (27) von einer Vorderseite (18) des Steckergehäuses (14) her aufgenommen wird, von der das Kontaktteil (20) in das Steckergehäuse (14) eingesteckt wird, und dass das zweite ortsaufgelöste Bild (34) von einer Rückseite (26) des Steckergehäuses (14) her aufgenommen wird.

3. Verfahren nach Anspruch 1 oder 2,
**dadurch gekennzeichnet, dass**
das zweite ortsaufgelöste Bild (34) die Greifvorrichtung (38) des Roboters (40) enthält und eine Position der Greifvorrichtung (38) in dem zweiten ortsaufgelösten Bild (34) ermittelt wird.

4. Verfahren nach zumindest einem der vorstehenden Ansprüche,
**dadurch gekennzeichnet, dass**
die Position des Steckergehäuses (14) relativ zu mehreren in dem ersten ortsaufgelösten Bild (27) enthaltenen Referenzmerkmalen (24) des Halters (10) ermittelt wird, und/oder dass die Position des Kontaktteils (20) relativ zu mehreren in dem zweiten ortsaufgelösten Bild (34) enthaltenen Referenzmerkmalen (24) des Halters (10) ermittelt wird.

5. Verfahren nach zumindest einem der vorstehenden Ansprüche,
**dadurch gekennzeichnet, dass**
zum Aufnehmen des das Kontaktteil (20) und den Halter (10) enthaltenden zweiten ortsaufgelösten Bildes (34) das Kontaktteil (20) von dem Roboter (40) auf den Halter (10) zu bewegt wird, bevor das zweite ortsaufgelöste Bild (34) aufgenommen wird.

6. Vorrichtung zum Bestücken eines Steckergehäuses (14) mit einem an einer elektrischen Leitung (36) angebrachten Kontaktteil (20), umfassend
- einen beweglichen Roboter (40) mit einer Greifvorrichtung (38), die zum Greifen der elektrischen Leitung (36) oder des Kontaktteils (20) ausgebildet ist,
- einen Halter (10), der zum Fixieren des Steckergehäuses (14) ausgebildet ist und mehrere Referenzmerkmale (24) aufweist,
- eine erste optische Erfassungsvorrichtung (16), die ausgebildet ist, um ein erstes ortsaufgelöstes Bild (27) derart aufzunehmen, dass zumindest ein Ausschnitt des Steckergehäuses (14) und zumindest ein Ausschnitt des Halters (10) in dem ersten ortsaufgelösten Bild (27) enthalten sind,
- eine zweite optische Erfassungsvorrichtung (42), die ausgebildet ist, um ein zweites ortsaufgelöstes Bild (34) derart aufzunehmen, dass zumindest ein Ausschnitt des Kontaktteils (20) und zumindest ein Ausschnitt des Halters (10) in dem zweiten ortsaufgelösten Bild (34) enthalten sind,
- eine Steuereinheit, die ausgebildet ist, um eine Position des Steckergehäuses (14) relativ zu wenigstens einem in dem ersten ortsaufgelösten Bild (27) enthaltenen Referenzmerkmal (24) des Halters (10) in dem ersten ortsaufgelösten Bild (27) und eine Position des Kontaktteils (20) relativ zu wenigstens einem in dem zweiten ortsaufgelösten Bild (34) enthaltenen Referenzmerkmal (24) des Halters (10) in dem zweiten ortsaufgelösten Bild (34) zu ermitteln und eine zum Bestücken des Steckergehäuses (14) mit dem Kontaktteil (20) notwendige Roboterbewegung unter Verwendung der ermittelten Positionen des Steckergehäuses (14) und des Kontaktteils (20) zu berechnen, und um den Roboter (40) so anzusteuern, dass der Roboter (40) die berechnete Bewegung durchführt.

7. Vorrichtung nach Anspruch 6,
**dadurch gekennzeichnet, dass**
der Halter (10) sowohl auf einer Vorderseite (18) als auch auf einer Rückseite (26) eines oder mehrere Referenzmerkmale (24) aufweist, die nur von der jeweiligen Vorder- oder Rückseite (18, 26) des Halters (10) her sichtbar sind, sowie eine oder mehrere Markierungen (50), die von beiden Seiten (18, 26) des Halters (10) her sichtbar sind.

8. Vorrichtung nach Anspruch 6 oder 7,
**dadurch gekennzeichnet, dass**
wenigstens eines der Referenzmerkmale (24) als Data Matrix Code ausgebildet ist, wobei der Data Matrix Code insbesondere auf einer Kunststofffolie des Halters (10) aufgebracht ist.

## Claims

1. Method for assembling a connector housing (14) with a contact part (20) attached to an electrical line (36) by a moveable robot (40), the method comprising the steps of:
- fixing the connector housing (14) to a holder (10) comprising a plurality of reference characteristics (24),
- gripping the electrical line (36) or the contact part (20) by a gripping device (38) of the robot (40),
- capturing a first spatially resolved image (27) by a first optical detection device (16) such that at least part of the connector housing (14) and at least part of the holder (10) are included in the first spatially resolved image (27), and
- capturing a second spatially resolved image (34) by a second optical detection device (42) such that at least part of the contact part (20) and at least part of the holder (10) are included in the second spatially resolved image (34),
- determining in the first spatially resolved image (27) a position of the connector housing (14) relative to at least one reference characteristic (24) of the holder (10) included in the first spatially resolved image (27) and determining in the second spatially resolved image (34) a position of the contact part (20) relative to at least one reference characteristic (24) of the holder (10) included in the second spatially resolved image (34),
- computing a robot motion required for assembling the connector housing (14) with the contact part (20) using the determined positions of the connector housing (14) and the contact part (20), and
- performing the computed motion by the robot (40).

2. The method according to claim 1,
**characterized in that**
the first spatially resolved image (27) is captured from a front side (18) of the connector housing (14) where the contact part (20) is inserted into the connector housing (14), and the second spatially resolved image (34) is captured from a rear side (26) of the connector housing (14).

3. The method according to claim 1 or 2,
**characterized in that**
the second spatially resolved image (34) includes the gripping device (38) of the robot (40) and a position of the gripping device (38) is determined in the second spatially resolved image (34).

4. The method according to at least one of the preceding claims, **characterized in that**
the position of the connector housing (14) is determined relative to a plurality of reference characteristics (24) of the holder (10) included in the first spatially resolved image (27), and/or
the position of the contact part (20) is determined relative to a plurality of reference characteristics (24) of the holder (10) included in the second spatially resolved image (34).

5. The method according to at least one of the preceding claims, **characterized in that**
for capturing the second spatially resolved image (34) that includes the contact part (20) and the holder (10), the contact part (20) is moved by the robot (40) towards the holder (10) before the second spatially resolved image (34) is being captured.

6. Device for assembling a connector housing (14) with a contact part (20) attached to an electrical line (36) comprising:
- a moveable robot (40) having a gripping device (38) adapted for gripping the electrical line (36) or the contact part (20),
- a holder (10) adapted for fixing the connector housing (14) and comprising a plurality of reference characteristics (24),
- a first optical detection device (16) adapted for capturing a first spatially resolved image (27) such that at least part of the connector housing (14) and at least part of the holder (10) are included in the first spatially resolved image (27),
- a second optical detection device (42) adapted for capturing a second spatially resolved image (34) such that at least part of the contact part (20) and at least part of the holder (10) are included in the second spatially resolved image (34),
- a control unit adapted for determining in the first spatially resolved image (27) a position of the connector housing (14) relative to at least one reference characteristic (24) of the holder (10) included in the first spatially resolved image (27) and determining in the second spatially resolved image (34) a position of the contact part (20) relative to at least one reference characteristic (24) of the holder (10) included in the second spatially resolved image (34), and for computing a robot motion required for assembling the connector housing (14) with the contact part (20) using the determined positions of the connector housing (14) and the contact part (20), and for controlling the robot (40) to perform the computed motion.

7. The device according to claim 6,
**characterized in that**
the holder (10) comprises one or more reference characteristics (24) on a front side (18) and on a rear side (26) visible only from the respective front or rear side (18, 26) of the holder (10), and one or a plurality of markings (50) visible from both sides (18, 26) of the holder (10).

8. The device according to claim 6 or 7,
**characterized in that**
at least one of the reference characteristics (24) is configured as data matrix code, wherein the data matrix code is particularly applied to a plastic film of the holder (10).

## Revendications

1. Procédé pour équiper un boîtier enfichable (14) avec une pièce de contact (20) montée sur une ligne électrique (36) au moyen d'un robot mobile (40), ledit procédé comprenant les étapes consistant à :
- fixer le boîtier enfichable (14) sur un support (10) qui comporte plusieurs caractéristiques de référence (24),
- saisir la ligne électrique (36) ou la pièce de contact (20) par un dispositif de saisie (38) du robot (40),
- prendre une première image à résolution locale (27) par un premier dispositif de capture optique (16) de telle façon qu'au moins une partie du boîtier enfichable (14) et au moins une partie du support (10) sont contenues dans la première image à résolution locale (27), et
- prendre une seconde image à résolution locale (34) par un second dispositif de capture optique (42) de telle façon qu'au moins une partie de la pièce de contact (20) et au moins une partie du support (10) sont contenues dans la seconde image à résolution locale (34),
- déterminer dans la première image à résolution locale (27) une position du boîtier enfichable (14) par rapport à au moins une caractéristique de référence (24) du support (10), contenue dans la première image à résolution locale (27), et déterminer dans la seconde image à résolution locale (34) une position de la pièce de contact (20) par rapport à ladite au moins une caractéristique de référence (24) du support (10), contenue dans la seconde image à résolution locale (34),
- calculer un déplacement du robot nécessaire pour équiper le boîtier enfichable (14) avec la pièce de contact (20) en utilisant les positions déterminées du boîtier enfichable (14) et de la pièce de contact (20), et
- exécuter le déplacement calculé au moyen du robot (40).

2. Procédé selon la revendication 1,
**caractérisé en ce que** la première image à résolution locale (27) est prise depuis une face antérieure (18) du boîtier enfichable (14), depuis laquelle la pièce de contact (20) est enfichée dans le boîtier enfichable (14), et **en ce que** la seconde image à résolution locale (34) est prise depuis une face postérieure (26) du boîtier enfichable (14).

3. Procédé selon la revendication 1 ou 2,
**caractérisé en ce que** la seconde image à résolution locale (34) contient le dispositif de saisie (38) du robot (40), et l'on détermine une position du dispositif de saisie (38) dans la seconde image à résolution locale (34).

4. Procédé selon l'une au moins des revendications précédentes,
**caractérisé en ce que**
l'on détermine la position du boîtier enfichable (14) par rapport à plusieurs caractéristiques de référence (24) du support (10), contenues dans la première image à résolution locale (27), et/ou **en ce que**
l'on détermine la position de la pièce de contact (20) par rapport à plusieurs caractéristiques de référence (24) du support (10), contenues dans la seconde image à résolution locale (34).

5. Procédé selon l'une au moins des revendications précédentes,
**caractérisé en ce que**
pour prendre la seconde image à résolution locale (34) qui contient la pièce de contact (20) et le support (10), la pièce de contact (20) est déplacée par le robot (40) en direction du support (10) avant de prendre la seconde image à résolution locale (34).

6. Dispositif pour équiper un boîtier enfichable (14) avec une pièce de contact (20) montée sur une ligne électrique (36), comprenant
- un robot mobile (40) avec un dispositif de saisie (38), qui est réalisé pour saisir la ligne électrique (36) ou la pièce de contact (20),
- un support (10), qui est réalisé pour fixer le boîtier enfichable (14) et qui comporte plusieurs caractéristiques de référence (24),
- un premier dispositif de capture optique (16), qui est réalisé pour prendre une première image à résolution locale (27) de telle façon qu'au moins une partie du boîtier enfichable (14) et au moins une partie du support (10) sont contenues dans la première image à résolution locale (27),
- un second dispositif de capture optique (42), qui est réalisé pour prendre une seconde image à résolution locale (34) de telle façon qu'au moins une partie de la pièce de contact (20) et au moins une partie du support (10) sont contenues dans la seconde image à résolution locale (34),
- une unité de commande qui est réalisée pour déterminer, dans la première image à résolution locale (27), une position du boîtier enfichable (14) par rapport à au moins une caractéristique de référence (24) du support (10), contenue dans la première image à résolution locale (27), et pour déterminer, dans la seconde image à résolution locale, une position de la pièce de contact (20) par rapport à au moins une caractéristique de référence (24) du support (10), contenue dans la seconde image à résolution locale (34), et pour calculer, en utilisant les positions déterminées du boîtier enfichable (14) et de la pièce de contact (20), un déplacement du robot nécessaire pour équiper le boîtier enfichable (14) avec la pièce de contact (20), et pour piloter le robot (40) de telle manière que le robot (40) exécute le déplacement calculé.

7. Dispositif selon la revendication 6,
**caractérisé en ce que** le support (10) comporte aussi bien sur une face antérieure (18) que sur une face postérieure (26) une ou plusieurs caractéristiques de référence (24), qui ne sont visibles que depuis la face antérieure ou postérieure respective (18, 26) du support (10), ainsi qu'une ou plusieurs marques (50) qui sont visibles depuis les deux faces (18, 26) du support (10).

8. Dispositif selon la revendication 6 ou 7,
**caractérisé en ce que** l'une au moins des caractéristiques de référence (24) est réalisée sous forme de code matriciel de données ("Data Matrix Code"), ledit code matriciel de données étant en particulier appliqué sur un film en matière plastique du support (10).
